# EUROPEAN PATENT SPECIFICATION

(11) **EP 1 629 998 B1**
(45) Date of publication and mention of the grant of the patent: **09.01.2008**
(21) Application number: 04020234.3
(22) Date of filing: 26.08.2004
(51) Int. Cl.: B60B 27/02, F16D 41/30

(54) **Rear hub assembly for a bicycle**
Hinterradnabenanordnung für ein Fahrrad
Assemblage d'éléments de moyeu arrière pour une bicyclette

(43) Date of publication of application: 01.03.2006
(73) Proprietor: CHIN HAUR INDUSTRY CO., LTD., Ta-Liao Hsiang, Kaohsiung Hsien (TW)
(72) Inventor: Lin, King-Chen, Ta-Liao Hsiang Kaohsiung Hsien (TW)
(74) Representative: LOUIS, PÖHLAU, LOHRENTZ

(56) References cited:
- EP-A- 0 471 349
- EP-A- 0 791 482
- DE-A1- 19 856 626
- FR-A1- 2 480 879
- GB-A- 2 128 273

## Description

The present invention relates to a rear hub assembly for a bicycle according to the preamble of claim 1.

In a bicycle, a rear hub assembly generally includes an axle extending through a hub spline and a hub and secured on a rear fork of the bicycle. A ratchet is provided between the hub spline and the hub. A chain wheel is provided outside the hub spline and driven by a chain. When the chain wheel is rotated forwards, the hub is driven and when the chain wheel is rotated backwards, the hub is not driven.

However, in a conventianal rear hub assembly, the axle is rotatably fastened to the hub and hub spline by nuts after being extended through the hub and hub spline, so it is very inconvenient to assemble the rear hub assembly and a tool must be used.

A rear hub assembly according to the preamble of claim 1 is disclosed in DE 198 56 626 A1.

From FR-A1-2 480 879 there is known a rear hub assembly for a bicycle comprising a hub and first and second bearings installed in the hub, and an axle extending through the hub and the bearings. A sleeve is coaxially provided around the hub and fastened between the first and second bearing.

EP-A-0 791 482 discloses a hub assembly for a bicycle comprising a hub having two flanges, a first and a second bearing installed in the hub, and an axle extending through the hub. A spacer is coaxially provided around the hub and is formed with flanges for retaining the inner ring of the bearings.

The invention provides a rear hub assembly for a bicycle to mitigate or obviate the aforementioned problems.

The main objective of the present invention is to provide a rear hub assembly which can be easily and manually assembled without a tool.

The inventive embodiment is claimed in claim 1. Preferred embodiments of the invention are claimed in 2 to 4.

Other objectives, advantages and novel features of the invention will become more apparent from the following detailed description when taken in conjunction with the accompanying drawings.

IN THE DRAWINGS
Fig. 1 is an exploded perspective view of a rear hub assembly for a bicycle in accordance with the present invention;
Fig. 2 is a cross sectional view of the rear hub assembly in Fig. 1; and
Fig. 3 is a side view of the rear hub assembly in Fig. 1.

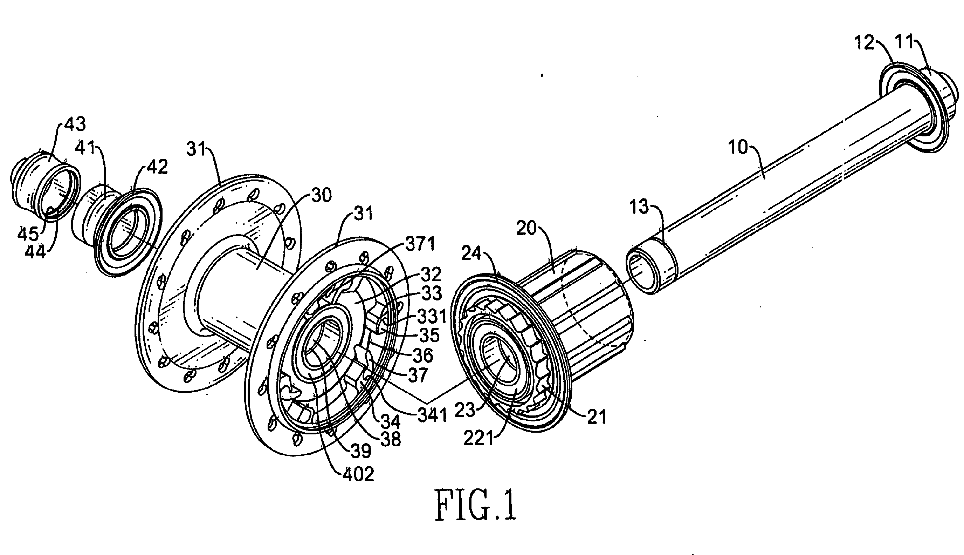

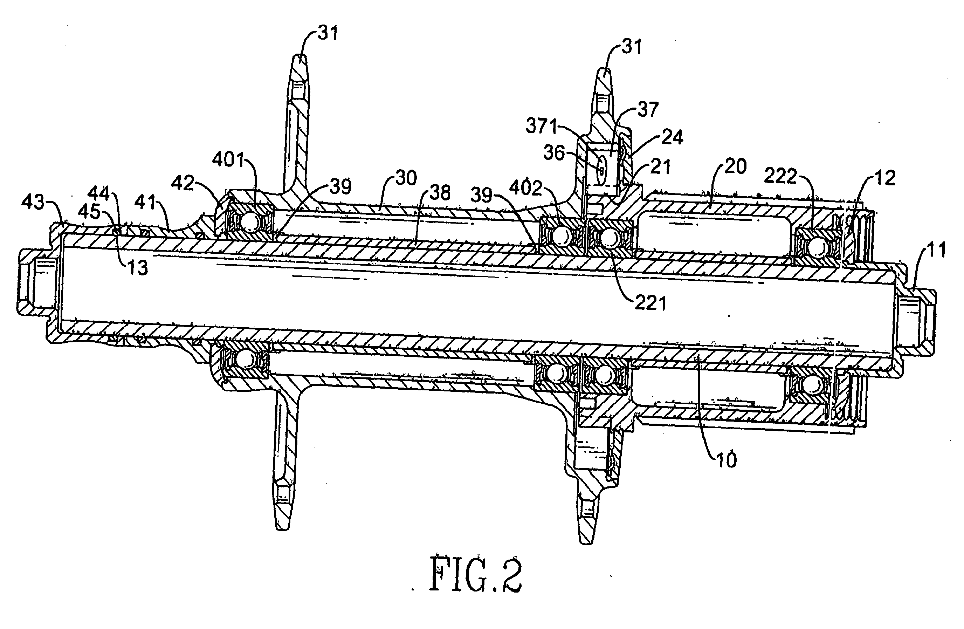

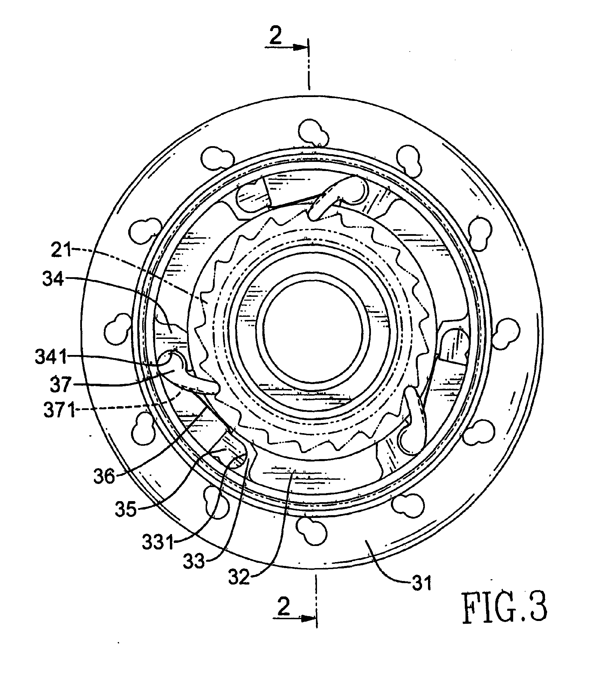

With reference to Figs. 1-3, a rear hub assembly for a bicycle in accordance with the present invention is composed of a hub (30), a hub spline (20) and an axle (10).

The hub (30) has two flanges (31) respectively formed at two sides thereof. A recess (32) is defined in one of the flanges (31). A first bearing (401) and a second bearing (402) are mounted in the hub (30) and a first sleeve (38) is received in the hub (30) and between the bearings (401, 402). Two collars (39) are respectively mounted at two ends of the sleeve (38) to secure the sleeve (38) with the bearings (401, 402) coaxially.

The hub spline (20) has a ratchet (21) received and uni-directionally rotatable in the recess (32) of the hub (30). A third bearing (221) and fourth bearing (222) are mounted in the hub spline (20). A second sleeve (23) is received in the hub spline (20) and between the third and fourth bearings (221, 222). A flange (24) is formed beside the ratchet (21) to enclose the recess (32) when the ratchet (21) is received in the recess (32).

The axle (10) extends through the hub spline (20) and the hub (30) and is fastened on a rear fork of the bicycle (not shown). The engagement between the axle (10) and the rear fork is the same as a conventional structure known by those skilled in the art and will not be described in detail. A first end cover (11) is provided on a first end of the axle (10) and extends out from the hub spline (20). A first cap (12) made of rubber is provided outside the first end cover (11) to shield the fourth bearing (222) from dirt, water etc. A first ring recess (13) is defined at a second end of the axle (10) and extends out from the hub (30). A second cap (41) with a rubber ring (42) is provided on the axle (10) and between the ring recess (13) and the hub (30). A second end cover (43) is mounted on the second end of the axle (10). A second ring recess (44) is defined in an inner wall of the second end cover (43) for receiving an O-ring (45) therein. The O-ring (45) is made of rubber and has an inner diameter slightly larger than an outer diameter of the axle (10). In assembling the second cover (43), the O-ring (45) is expanded slightly outwards to enlarge the inner diameter thereof and then be eased over the axle (10). When the O-ring (45) arrives at the first ring recess (13), the inner diameter of the O-ring (45) contracts to be positioned in the first ring recess (13). Therefore, the axle (10) is securely mounted in the hub (30), the hub spline (20).

For disassembling the axle (10), the second cover (43) is pulled out and the O-ring (45) is expanded again to enable the second cover (43) to be removed from the axle (10).

Multiple teeth (34) and multiple stops (33) are alternately formed on an inner circumference of the recess (32), e.g. one tooth (34) is provided between two adjacent stops (33), and one stop (33) is provided between two adjacent teeth (34). The teeth (34) each have a first slot (341) defined at a side thereof facing one of the adjacent stops (33), and the stops (33) each have a second stop (331) defined at a side thereof facing the corresponding first stop (341). Multiple fingers (37) are respectively rotatably received in the first slot (341) of the teeth (34) and engaged with the ratchet (21). The fingers (37) each have a groove (371) defined at a back surface thereof. Multiple blocks (35) are respectively received in the second slots (331). Multiple resilient wires (36) are respectively secured on the blocks (35) and each have a free end extending towards the corresponding finger (37) and positioned in the corresponding groove (371).

When the ratchet (21) is rotated counter-clockwise, the fingers (37) can be pivoted in the respective first slots (341) to allow the rotation of the ratchet (21). Under the elastic force of the resilient wires (36), the fingers (37) tightly abut the ratchet (21) to prevent the ratchet (21) from clockwise rotation. Therefore, the ratchet (21) can be rotated in the recess (32) in only one direction.

Those skilled in the art will understand that the stop (33) and block (35) can alternatively be replaced with a screw (not shown) installed in the recess (32) for securing the resilient wire (36).

Therefore, a chain wheel (not shown) is mounted on the hub spline (20) for driving the ratchet (21) and the fingers (37). When the chain wheel is turned forwards, the hub (30) is rotated; when the chain wheel is turned backwards, the hub (30) is free running because the fingers (37) are pressed outwards.

According to the present invention, because the axle (10) is inserted through the hub spline (20) and the hub (30) and the cover can be directly secured by the O-ring (45), the rear hub assembly can be manually and quickly assembled or disassembled without using a tool.

Because the multiple fingers (37) are provided, the engagement between the ratchet (21) and the fingers (37) can be ensured even if one or more fingers (37) experiences failure.

## Claims

1. A rear hub assembly for a bicycle comprising:
a hub (30) having two flanges (31) respectively formed at two sides of the hub (30), a recess (32) defined in one of the flange (31), a first bearing (401) and a second bearing (402) installed in the hub (30);
a hub spline (20) having a ratchet (21) formed at a side facing the hub (30) and engaged in the recess (32), a third bearing (221) and a fourth bearing (222) installed in the hub spline (20), and a second sleeve (23) fastened between the third and fourth bearings (221, 222); and
an axle (10) extending through the hub spline (20) and the hub (30), the axle (10) having a first cover (11) provided at a first end of the axle, a second cover (43) secured on the second end of the axle, and an O-ring (45) provided in the second cover (43) and positioned in a ring recess (13);
**characterized in that**
a first sleeve (38) is fastened between and coaxial with the first and second bearings (401, 402) by two collars (39) respectively at two ends of the first sleeve (38);
the first ring recess (13) is defined at a second end of the axle (10);
the hub (30) has multiple teeth (34) and multiple stops (33) alternately formed on an inner circumference of the recess (32), multiple fingers (37) respectively rotatably mounted on the teeth (34) and engaged with the ratchet (21), and multiple resilient wires (36) respectively provided on the stops (33) and each having a free end abutting a back surface of a corresponding one of the fingers (37).

2. The rear hub assembly as claimed in claim 1, wherein the second cover (43) has a second ring recess (44) defined in an inner wall of the second cover (43), and the 0-ring (45) is positioned in the second ring recess (44) and has an inner diameter slightly large than an inner diameter of the second cover (43).

3. The hub assembly as claimed in claim 1, wherein the teeth (34).each have a first slot (341) defined at a side facing one of the adjacent stops (33), the stops (33) each have a second slot (331) defined at a side facing the corresponding first stop (341), the fingers (37) are respectively rotatably received in the first slots (341) of the teeth (34), blocks (35) are respectively received in the second slots (331), and the resilient wires (36) respectively secured on the blocks (35).

4. The hub assembly as claimed in claim 1, wherein the fingers (37) each have a groove (371) defined at the back surface, and the free ends of the resilient wires (36) are respectively positioned in the grooves (371).

## Patentansprüche

1. Hinterradnaben-Baueinheit für ein Fahrrad, die umfasst:
eine Nabe (30) mit zwei Flanschen (31), die jeweils an einer von zwei Seiten der Nabe (30) ausgebildet sind, einer Aussparung (32), die in einem der Flansche (31) definiert ist, sowie einem ersten Lager (401) und einem zweiten Lager (402), die in der Nabe (30) installiert sind;
eine Keilnabe (20) mit einem Klinkenrad (21), das an einer der Nabe (30) zugewandten Seite ausgebildet und mit der Aussparung (32) in Eingriff ist, einem dritten Lager (221) und einem vierten Lager (222), die in der Keilnabe (20) installiert sind, sowie einer zweiten Hülse (23), die zwischen dem dritten und dem vierten Lager (221, 222) befestigt ist; und
eine Welle (10), die sich durch die Keilnabe (20) und die Nabe erstreckt und versehen ist mit einer an ihrem ersten Ende vorgesehenen ersten Abdeckung (11), einer an ihrem zweiten Ende befestigten zweiten Abdeckung (43) sowie einem in der zweiten Abdeckung (43) vorgesehenen und in einer Ringaussparung (13) angeordneten O-Ring (45);
**dadurch gekennzeichnet, dass**
eine erste Hülse (38) koaxial zwischen dem ersten und dem zweiten Lager (401, 402) durch zwei Kränze (39), die an den zwei entsprechenden Enden der ersten Hülse (38) vorhanden sind, befestigt ist;
die erste Ringaussparung (13) am zweiten Ende der Welle (10) definiert ist; und
die Nabe (30) mehrere Zähne (34) und mehrere Anschläge (33), die abwechselnd an einem inneren Umfang der Aussparung (32) ausgebildet sind, mehrere Finger (37), die an den Zähnen (34) drehbar angebracht und mit dem Klinkenrad (21) in Eingriff sind, sowie mehrere elastische Drähte (36), die an den Anschlägen (33) vorgesehen sind und jeweils ein freies Ende haben, das an einer hinteren Oberfläche eines Entsprechenden der Finger (37) anliegt, besitzt.

2. Hinterradnaben-Baueinheit nach Anspruch 1, wobei die zweite Abdeckung (43) eine zweite Ringaussparung (44) besitzt, die in einer Innenwand der zweiten Abdeckung (43) definiert ist, und der O-Ring (45) in der zweiten Ringaussparung (44) positioniert ist und einen Innendurchmesser besitzt, der etwas größer als ein Innendurchmesser der zweiten Abdeckung (43) ist.

3. Nabenbaueinheit nach Anspruch 1, wobei die Zähne (34) jeweils einen ersten Schlitz (341) besitzen, der an einer den benachbarten Anschlägen (33) zugewandten Seite definiert ist, die Anschläge (33) jeweils einen zweiten Schlitz (331) besitzen, der an einer dem entsprechenden ersten Anschlag (341) zugewandten Seite definiert ist, die Finger (37) in den ersten Schlitzen (341) der Zähne (34) jeweils drehbar aufgenommen sind, in den zweiten Schlitzen (331) jeweils Blöcke (35) aufgenommen sind und die elastischen Drähte (36) jeweils an den Blöcken (35) befestigt sind.

4. Nabenbaueinheit nach Anspruch 1, wobei die Finger (37) jeweils eine Nut (371) besitzen, die an der hinteren Oberfläche definiert ist, und die freien Enden der elastischen Drähte (36) jeweils in den Nuten (371) angeordnet sind.

## Revendications

1. Ensemble de moyeu arrière pour une bicyclette, comprenant :
un moyeu (30) ayant deux rebords (31) respectivement formés au niveau des deux côtés du moyeu (30), un évidement (32) défini dans l'un des rebords (31), un premier palier (401) et un second palier (402) installés dans le moyeu (30) ;
une cannelure de moyeu (20) ayant un encliquetage (21) formé au niveau d'un côté orienté vers le moyeu (30) et mise en prise dans l'évidement (32), un troisième palier (221) et un quatrième palier (222) installés dans la cannelure de moyeu (20), et un second manchon (23) fixé entre les troisième et quatrième paliers (221, 222) ; et
un essieu (10) s'étendant à travers la cannelure de moyeu (20) et le moyeu (30), l'essieu (10) ayant un premier couvercle (11) prévu au niveau d'une première extrémité de l'essieu, un second couvercle (43) fixé sur la seconde extrémité de l'essieu et un joint torique (45) prévu dans le second couvercle (43) et positionné dans un évidement annulaire (13);
**caractérisé en ce que** :
un premier manchon (38) est fixé entre et coaxial avec les premier et second paliers (401, 402) par deux colliers (39) respectivement aux deux extrémités du premier manchon (38) ;
le premier évidement annulaire (13) est défini au niveau d'une seconde extrémité de l'essieu (10) ;
le moyeu (30) a plusieurs dents (34) et plusieurs butées (33) formées de manière alternée sur une circonférence interne de l'évidemment (32), plusieurs doigts (37) respectivement montés de manière rotative sur les dents (34) et mis en prise avec l'encliquetage (21), et plusieurs câbles élastiques (36) respectivement prévus sur les butées (33) et chacun ayant une extrémité libre en butée contre une surface arrière d'un doigt correspondant des doigts (37).

2. Ensemble de moyeu arrière selon la revendication 1, dans lequel le second couvercle (43) a un second évidemment annulaire (44) défini dans une paroi interne du second couvercle (43) et le joint torique (45) est positionné dans le second évidemment annulaire (44) et a un diamètre interne légèrement plus grand qu'un diamètre interne du second couvercle (43).

3. Ensemble de moyeu selon la revendication 1, dans lequel les dents (34) ont chacune une première fente (341) définie au niveau d'un côté orienté vers une butée des butées (33) adjacentes, les butées (33) ayant chacune une seconde fente (331) définie au niveau d'un côté orienté vers la première butée (341) correspondante, les doigts (37) sont respectivement reçus de manière rotative dans les premières fentes (341) des dents (34), des blocs (35) sont respectivement reçus dans les secondes fentes (331), et les câbles élastiques (36) respectivement fixés sur les blocs (35).

4. Ensemble de moyeu selon la revendication 1, dans lequel les doigts (37) ont chacun une rainure (371) définie au niveau de la surface arrière, et les extrémités libres des câbles élastiques (36) sont respectivement positionnées dans les rainures (371).
